# EUROPEAN PATENT SPECIFICATION

(11) **EP 2 945 766 B1**
(45) Date of publication and mention of the grant of the patent: **21.09.2016**
(21) Application number: 13814868.9
(22) Date of filing: 11.12.2013
(51) Int. Cl.: B23D 31/04, B23D 35/00

(54) **A METHOD AND APPARATUS FOR OPERATING A SHEAR**
VERFAHREN UND VORRICHTUNG ZUM BETRIEB EINER SCHERMASCHINE
PROCÉDÉ ET APPAREIL D'OPÉRATION D'UNE CISAILLE

(30) Priority: 18.01.2013 GB 201300926
(43) Date of publication of application: 25.11.2015
(73) Proprietor: Primetals Technologies, Limited, London EC1A 2DY (GB)
(72) Inventor: STONECLIFFE, David, Dore Sheffield S17 3GX (GB)
(74) Representative: Schweighofer, Andreas
(86) International application number: PCT/EP2013/076191
(87) International publication number: WO 2014/111205

(56) References cited:
- EP-A1- 1 034 869
- JP-A- H02 269 517
- US-A- 3 555 951
- US-A- 3 726 170
- US-A- 4 674 378
- US-A1- 2009 165 626

## Description

This invention relates to a method according to the preamble of claim 1 and related apparatus according to the preamble of claim 5 for operating a shear for shearing metal plates. In particular it relates to shears for side trimming and slitting metal plates Such a method and such an apparatus are generally known from US 4 674 378 A.

Shears for the trimming and slitting of steel plate are often of the rolling blade type. This type of shear uses a cyclic step operation. In this case the shear's blades are shorter than the length of cut required for the full length of the plate. Therefore the shearing operation is executed in a series of cutting cycles, the length ofeach cut being slightly shorter than the length of the blades and much shorter than the full length of the plate.

As a result of the cyclic step operation of the shears, discontinuity imperfections are sometimes produced in the sheared edges. The discontinuity imperfections takes the form of notching at the positions on the cut edge of the plate corresponding to the point where each shearing cycle ends and the next shearing cycle starts.

The notching and an associated slight bulging of the edge at the discontinuity points can be unacceptable to some users of the sheared plates.

US 474378 describes a shearing machine in which the clearance between the upper and lower blades is adjusted to match the plate thickness.

JPH02269517 describes using displacement sensors to set a gap of a moveable blade in a shear.

JP2002001608 describes a shearing machine which is able to automatically change the rake angle and stroke according to the workpiece.

In accordance with a first aspect of the present invention, a method of operating a side trim or slitting shear comprising a first blade and a second blade; the method comprising determining parameters of a material to be sheared; storing the determined parameters; and in a control system using the determined parameters to control adjustment of an angle formed between the first and second blades and in the plane of the material.

This allows the blade positions to be automatically adjusted, so that different types and thicknesses of material may be sheared in succession.

Preferably, the parameters comprise as least one of material thickness, strength, elongation to fracture, temperature and cutting feed length.

Adapting the blade gap according to the properties of the material being sheared results in a more parallel cut.

Preferably, the parameters further comprise variation in shear stiffness along the length of the shear.

Adapting the position of the second blade according the change in shear stiffness, as well as the material parameters further improves the results.

Preferably, the first blade is fixed and the second blade is moveable.

In accordance with a second aspect of the present invention; a side trim or slitting shear comprises a first blade and a second blade; a store for storing parameters of a material to be sheared; and a control system for controlling, using the parameters, adjustment of an angle formed between the first and second blades and in the plane of the material.

An example of a method of operating, a side trim or slitting shear according to the present invention will now be described with reference to the accompanying drawings in which:
Figure 1 illustrates a typical rolling blade type shear;
Figure 2 shows how discontinuities may be formed in a strip or plate being sheared with the shear of Fig. 1;
Figure 3 illustrates the position of cutting forces and side loads at the start of a cut;
Figure 4 illustrates the position of cutting forces and side loads towards the end of a cut;
Figure 5 is a graph of side force against time for different materials and cut lengths;
Figure 6 illustrates a mechanism for blade gap adjustment;
Figure 7 shows another view of the mechanism of Fig.:6;
Figure 8 illustrates a back off mechanism;
Figures 9a to 9c shows a comparison of existing cuts with an improved cut using static adjustment of parallelism according to one embodiment of the invention and an ideal cutting path;
Figure 10 illustrates a first embodiment of a dynamically adjustable shear according to the invention;
Figure 11 illustrates graphically an operating cycle for the shear of Fig. 10;
Figure 12 illustrates a second embodiment of a dynamically adjustable shear according to the invention;
Figure 13 illustrates a third embodiment of a dynamically adjustable shear according to the invention.

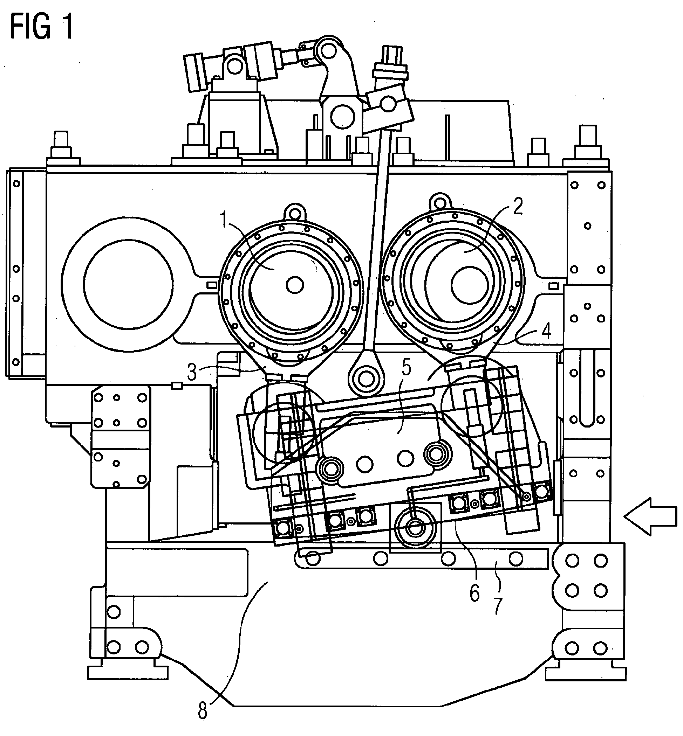

The present invention addresses the problem of discontinuity imperfections in side trim or slitting shears. Whilst thinner metal plates, up to around 20mm to 25 mm thick, can be sheared with rotary shears, most shears for cutting thicker metal plates up to around 50mm to 60 mm thick, are of the rolling blade type. One blade, usually the upper blade, is curved and the other blade, usually the lower blade, is straight and the upper blade performs a rolling type cutting action. Most commonly the rolling type cutting action is produced by a double crank type mechanism. A typical mechanism is illustrated in Fig 1. Cranks 1, 2 are connected via rods 3,4 to a top knife beam 5 to which the curved upper blade 6 is attached. A straight lower blade 7 is attached to the shear housing 8. Rotation of the cranks 1,2 causes the upper blade 6 to move downwards from its highest opening position until it contacts the plate and executes a rolling type cut. At the end of the cut continued rotation of the cranks 1, 2 raises the upper blade 6 out of contact with the plate and back to its highest opening position. Actuation of the blade may be by means of cranks as shown in Fig.1, or by hydraulic cylinders (not shown).

The rolling cut type mechanism is used for both divide shears - which cut across the width of the plate - and for side trim shears and slitting shears which cut along the length of the plate. In general divide shears are made large enough to cut across the width of the plate in a single cutting movement - for example a shear to cut 5 m wide plates has upper and lower blades which are more than 5 m long so that only a single rolling cut movement is required to divide the plate across its width. However, this is not practical with side trim shears and slitting shears because the length of the plates can be up to 50 m or more and a shear capable of cutting a 50 m length in one cut would be prohibitively expensive.

Consequently rolling cut side trim and slitting shears carry out multiple shorter cuts along the length of the plate. Typically each cut is only around 1 to 1.5 m in length. Usually the cranks 1,2 rotate continuously and during the part of the cycle where the blade 6 is above the plate which is being sheared, the plate is moved forward by the appropriate distance, usually by pinch rolls (not shown in Fig 1), so that as the rotation of the cranks continues and the blade descends to start the next cut, the plate is already in the correct position for the next cut.

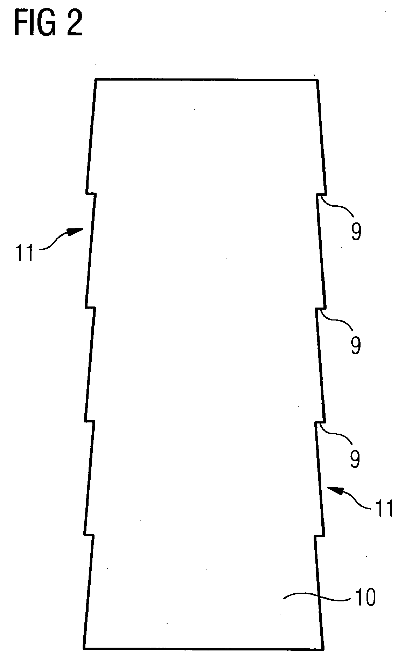

A problem with existing side trim and slitting shears is that the start and end of these multiple cuts do not always align properly with each other and there are small discontinuities such as bulges, or notches, or nicks in the cut edge of the plate. Fig 2 illustrates the problem. A plate 10, trimmed on both sides in this example, has cut edges 11 with discontinuities 9 along each edge. For clarity, the depth of the notches has been exaggerated compared to the width of the plate. In practice the notches are usually less than 0.5 mm in depth. None the less, the notches are undesirable and for some applications the sheared plate requires additional machining, or grinding to remove these notches. Thus, it is preferable to avoid or significantly reduce the depth of these discontinuities in the cut edge formed in the shearing process.

During the shearing operation the mechanism and the structure of the shearing machine and the plate being cut are subjected to high forces, both in the vertical and horizontal directions. These forces produce elastic deflections of the shearing machine and the plate being cut which cause the upper blade and the edges of the plate to be displaced. Horizontal displacement of the upper blade and the plate produces a slight deformation in the straightness of the sheared edge. If the displacements are different at the start and end of the cut then the start of the cut is slightly misaligned with the end of the preceding cut thereby producing the notches in the cut edge.

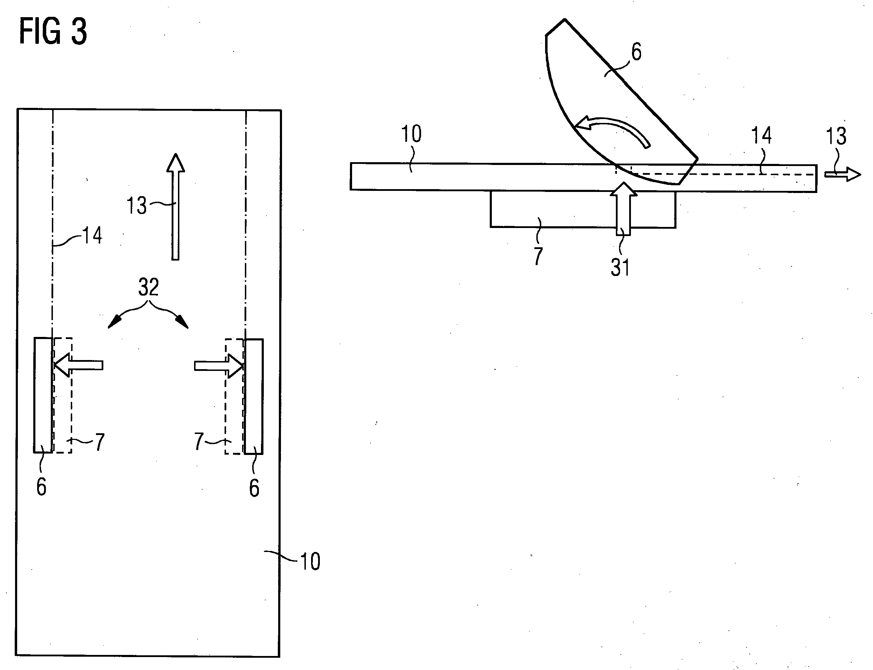

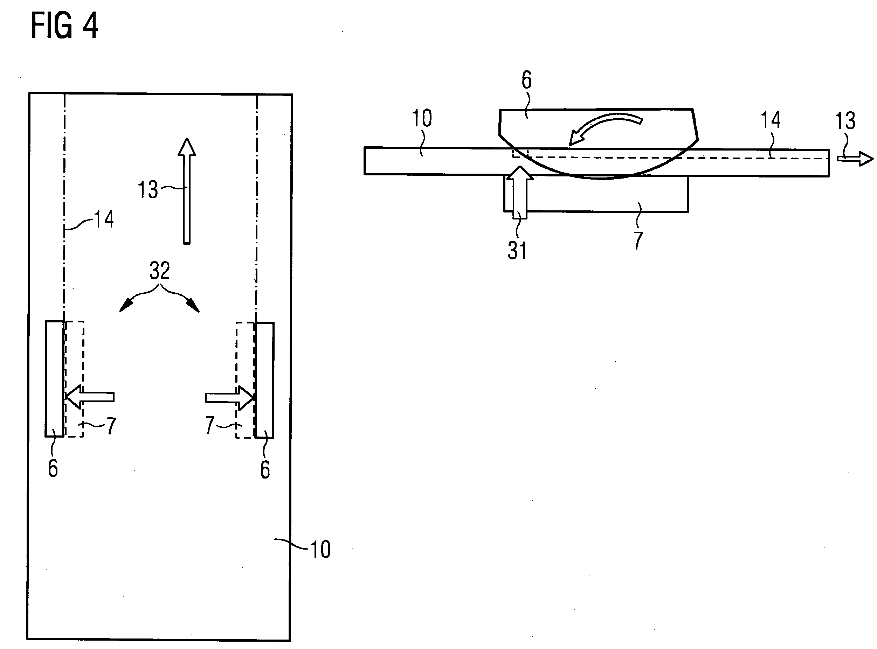

The present invention makes use of the fact that the depth of the discontinuities in the cut edge varies depending on the strength and thickness of the material which is being sheared. It is well known that the shearing action produces side loads between the blades which are typically 25-30% of the vertical load which is required to cut the material. In a typical rolling blade shear for cutting 50 mm thick metal the vertical cutting force can be up to 7000 kN and thus the side loads can be more than 2000 kN. It is also well known that the centre of the cutting force moves along the blade during the cut. This is illustrated in Figs 3 and 4. Fig 3 shows the shear during the first part of the cut. The plate 10 moves through the shear 6, 7 between cuts in the direction of arrow 13. The straight lower blade 7 is underneath the plate and the rolling blade 6 starts to move down towards the lower plate 7. The already cut section 14 of the plate is moved away from the blades. Side forces 32 on the blades correspond with the position of the centre of the cutting force 31. At this stage of the cut the side forces 32 are towards the leading end of the blades 6, 7. Fig 4 shows the shear during the last part of the cut. The position of the side forces 32 corresponds with the position of the centre of the cutting force 31. At this stage of the cut the side forces are towards the trailing end of the blades.

Movements of the blades 6, 7 due to the side forces 32 are restrained by the structure and the mechanism of the shear, but clearly the structure and mechanism cannot be infinitely stiff and therefore the blades will move further apart when cutting thick and strong material when the side forces are high, than they will when cutting thinner and softer material when the side forces are lower.

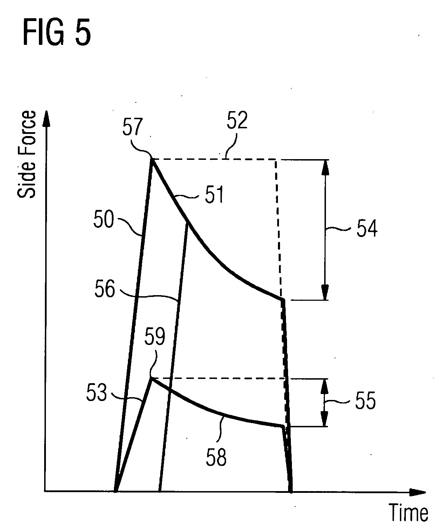

The fact that the blades are moved further apart by the side forces when cutting thick and strong material is not a problem in itself provided that the blade gap stays parallel and maintains the same value throughout the length of the cut. However, with existing shear designs; in practice the blade gap does not stay parallel and constant throughout the length of the cut. The main reasons for this are changes in shear stiffness and side forces. Firstly, the stiffness of the shear is not exactly the same for all positions of the side forces. If the stiffness of the shear structure and mechanism is higher or lower for side forces applied at the start of the cut, as illustrated in Fig 3, compared with the stiffness for side forces applied at the end of the cut, as illustrated in Fig 4, then, even if the side force 32 was exactly the same throughout the length of the cut, the blade gap would change by different amounts along the length of the cut. Secondly, the side force is not actually constant throughout the length of the cut. Fig 5 illustrates a typical pattern for the side force during a cut. At the start of the cut the force rapidly increases as the blade starts to penetrate the material. If the rolling cut type action was perfect then the force 50 would reach a maximum 57 and stay constant at this level as illustrated by the line 52. However in practice the geometry of actual shears operated by cranks is such that the blade does not follow a perfect rolling cut motion and therefore, having reached its maximum 57, the side force varies between the start and end of the cut as illustrated by the line 51.

The combination of the difference in stiffness of the shear for side forces applied at different positions along the blade and the variation in side force through the length of the cut means that the blade gap does not stay constant and parallel through the length of the cut. Another factor is that the shear is required to cut many different materials with different thicknesses and strengths. If the shear was always cutting the same material so that the side force pattern was always the same, then the blade could be shimmed or adjusted to minimize the depth of the discontinuities in the cut edge for this material. However, when the shear is being used at different times to cut many different materials with different strengths and thicknesses this approach does not work because both the maximum amplitude 57, 59 of the side force and the difference 54, 55 in side force between the start and end of the cut are different for different materials. This can be seen, for example with line 53, which has a much lower maximum 59 and smaller variation 55 in side force 58 than the first example.

Another factor which causes the side force pattern to change is that this type of shear often takes shorter cutting lengths on thicker material than it does on thin material i.e. the plate is fed into the shear by a shorter distance between cuts. This results in the cut starting further along the blade as illustrated by line 56 in Fig 5.

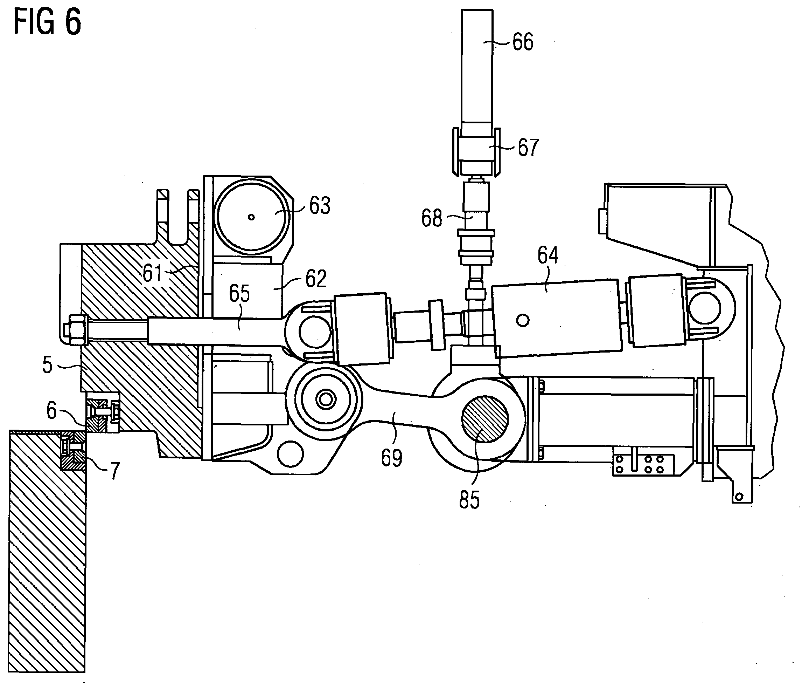

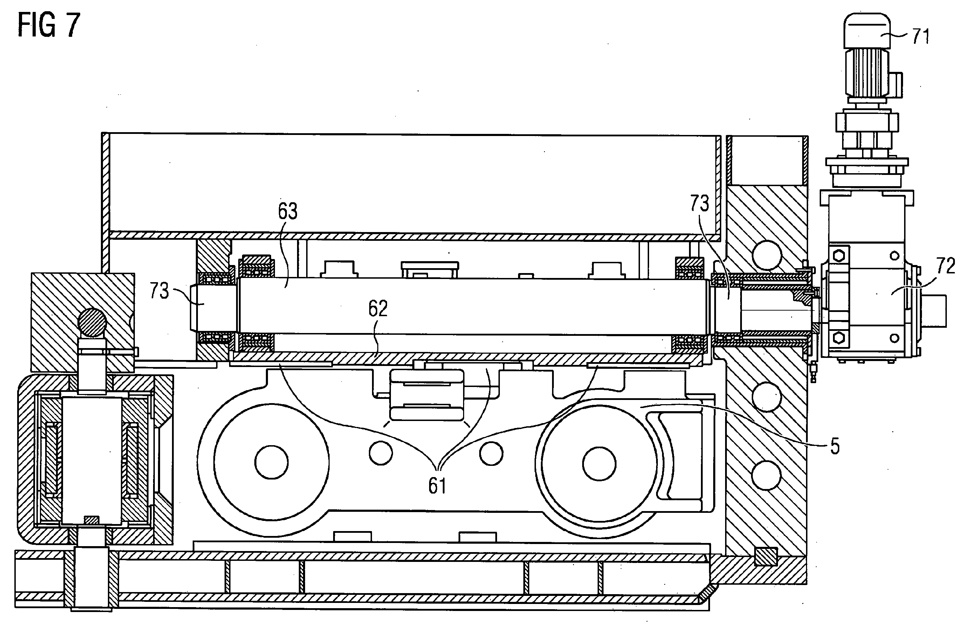

Typically, the blade gap is set according to the thickness and strength of the material, preferably, around 10% of the thickness of the material being sheared. The exact percentage is chosen to achieve the best cut edge quality. A typical mechanism for adjusting the blade gap is illustrated in Figs.6 and 7. The top knife beam 5 moves up and down on slides 61 against a moveable slide support frame 62. The top knife beam 5 is held against the slides 61 by pullback cylinder 64 and linkage 65. The moveable slide support frame 62 is supported on an eccentric shaft 63. The gap between the top blade 6 and the bottom blade 7 is adjusted by rotating this eccentric shaft using the mechanism illustrated in Figs. 6 and 7. Motor 71 rotates the eccentric shaft 63 via gearbox 72. The rotation of the eccentric shaft 63 causes the moveable slide support frame 62 to move towards or away from the bottom blade and hence changes the blade gap. There is no facility within this mechanism for quick adjustment of the parallelism of the top and bottom blade. The only way in which the parallelism can be adjusted is by shimming or similar methods.

Another type of mechanism for adjusting the blade gap which is well known is the type which uses wedges, for example as described in GB999188. The mechanism described in GB999188 is usually used on divide shears; it is not usually used on side trimming shears because of the limited space available and because of the lack of a blade back-off mechanism which is discussed below. In the system of GB999188, wedges operated by screw jacks are used to alter the blade gap. The arrangement shown has four sets of wedges across the width of the blade and the screw jacks which operate these wedges are linked by shafts containing couplings which can be engaged or disengaged. In this way the blade gap can be adjusted by moving all of the wedges together and the blade parallelism can also be adjusted by releasing some of the couplings so that some of the screw jacks can be operated independently of the others. However, GB999188 makes no suggestion of changing the parallelism of the blades according to the thickness and strength of the material being sheared. The only change is to the blade gap.

Shears of the rolling blade type for side trimming and slitting steel plate usually employ a mechanism for backing off the moving knife blade during the up stroke. The purpose of the backing off is to avoid damaging the edge of the cut plate and to reduce wear on the blades. When the cut has been completed and the blade starts moving upwards the top blade is moved away from the cut edge of the material by a small distance. There is no back off mechanism in GB999188.

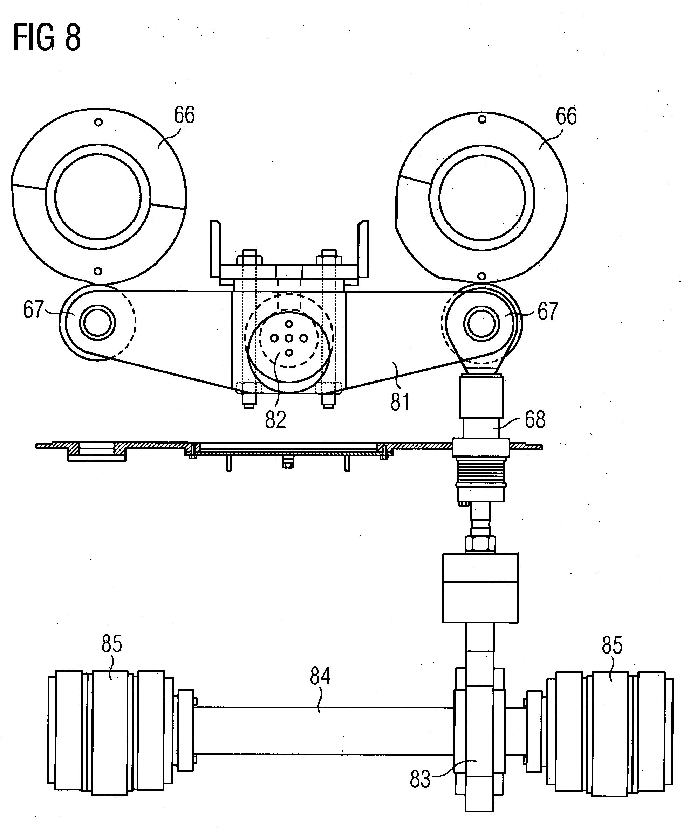

Further detail of a typical system as illustrated in Figs 6 to 8 will now be described. Two cams 66 operate a lever 81 via cam followers 67. The cams 66 are connected to the main gearbox which operates the cranks 1, 2, so that the movement of the blade back-off system is synchronized with the movement of the cutting mechanism. The lever 81 rotates shaft 84 via eccentric 83. The rotation of shaft 84 moves eccentrics 85 so that connecting rods 69 retract the bottom of the moveable slide support frame 62 away from bottom blade 7. The top knife beam 5 and top blade 6 are held against the slides 61 on the moveable slide support frame 62 by the pullback cylinder 64 and linkage 65, so when the slide support frame is retracted by the links 69 the top blade 6 moves away from the bottom blade 7. The profile of the cams 66 is arranged so that this back-off movement occurs at the correct point in the cycle. Other types of back-off mechanism are described in GB1081496 and in GB1085778.

In one embodiment of the shear of the present invention the parallelism of the blades may be adjusted for different material thicknesses and strengths whilst also having the ability to adjust the average blade gap for different materials and also having the ability to back-off (i.e. open) the blade gap during the return stroke.

GB999188 describes a wedge type adjustment system in which the wedge mechanisms can be adjusted independently in order to slightly alter the parallelism of the blade. One solution to the problem of adjusting the parallelism for different materials and their properties, such as thickness and strength, according to the present invention, is to replace one or more of the simple slides 61 of Fig.6, with a wedge type adjustment system similar to GB999188. If desired the eccentric shaft 63 may be dispensed with and at least two wedges can be used to adjust both the blade gap and parallelism. The system may include a curvature to the back of the wedges to allow the load to be properly distributed on the wedge, even if the top knife beam 5 is at a slight angle to the moveable slide support 62.

Another alternative to achieve the alteration in parallelism of the blades according to the present invention is to add an additional eccentric at one or both of the supports 73 for the shaft 63 such that rotation of this additional eccentric causes the whole shaft 63 and moveable slide support 62 to take up a small angle relative to the bottom blade. The bearings at the ends of shaft 63 have to be designed to allow this small angular movement. An additional eccentric is also added to one or both of the fixed supports at the ends 85 of the shaft 84, so that rotation of this additional eccentric causes shaft 84 to take up a small angle relative to the bottom blade. The bearings at the end of shaft 84 have to be designed to accommodate this small angular movement. Ideally the two additional eccentrics are rotated in such a way that shaft 84 remains parallel with shaft 63. In this way the blade gap adjustment and back-off are maintained, but the additional eccentrics also allow the parallelism of the blades to be adjusted.

In the embodiments such as those described above in which the parallelism of the blade can be adjusted for different materials in a static manner. A solution with additional advantages is to adjust the blade gap dynamically during the cutting movement of a cutting cycle, so that the cutting path remains parallel.

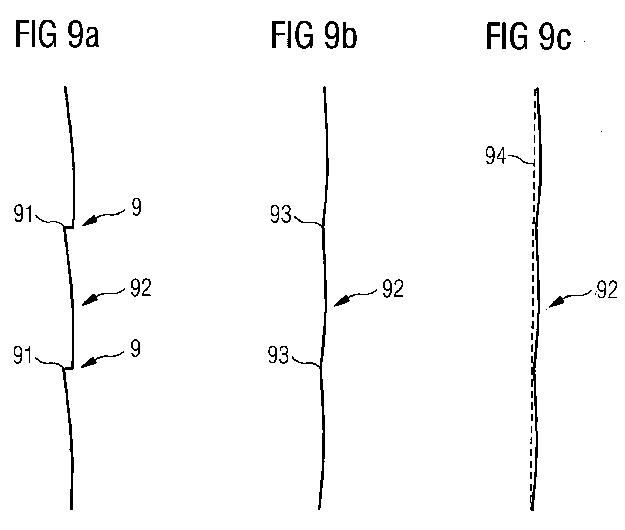

Adjusting the parallelism of the blade may significantly reduce the discontinuities in the cut edge by ensuring that the start and end of the cut are at the same point. However, there can still be a discontinuity due a slight curvature of the cut which is caused by the variation in the side load through the length of the cut and the variation in the effective stiffness of the shear along the length of the cut. This is illustrated in Figs.9a to 9c. Fig 9a shows the current situation with nicks or notches 9 in the cutting path 92 at the point where one cut ends and the next cut starts. Fig 9b shows the situation if the parallelism of the blade is adjusted to the optimum value. The notches 9 have gone, but there are still small discontinuities 93 which are caused because the cutting path 92 is slightly curved due to the variation in side force through the length of the cut and the variation in stiffness of the shear for side forces applied at different points along the length of the cut. Fig 9c shows this curvature 93 against an ideal cutting path 94. The ideal cutting path can be achieved by dynamically making very small adjustments to the position of the blade through the length of the cutting cycle.

In a dynamically adjustable system, the slide support frame and the top knife beam and blade nominally stay parallel to the bottom blade, apart from any angular movement which is caused by the side loading. The displacement of the hydraulic cylinders is changed dynamically during the cutting action, so that the path of the cut stays parallel, even if the blade itself is not actually parallel.

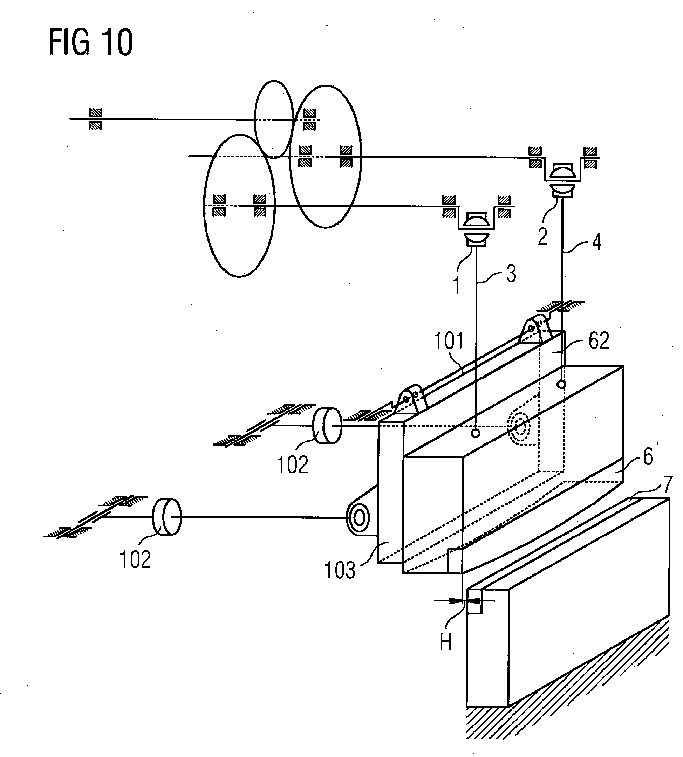

One embodiment of a system for carrying out the method of the present invention is illustrated diagrammatically in Fig 10. In this embodiment hydraulic cylinders 102 are used to compensate for shear deformation and carry out all three functions of setting the nominal blade gap, backing-off the blade gap during the up stroke and dynamically adjusting the blade gap during the cutting cycle. A plain shaft 101 replaces the eccentric shaft 63. A guide plate 103 is provided behind the top trimming knife 6 and the crankshafts 1,2 drive the rolling blade shearing action of the top trimming knife. A horizontal gap, H, is shown between the top and bottom knives 6, 7. The hydraulic cylinders 102 are operated by high response servovalves (not shown) because they need to make small movements very quickly during the cutting cycle. Position transducers (not shown) either within the cylinders 102 or attached between the moveable slide frame 62 and the main frame are used for feedback and a computer control system (not shown) controls the position of the slide frame 62 using these position transducers and the servovalves and cylinders 102.

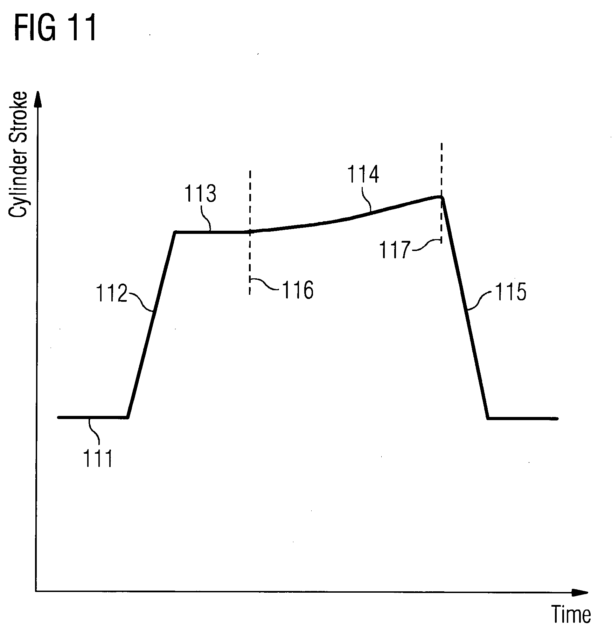

A typical cutting cycle is illustrated in Fig 11. Initially the blade 6 is in a retracted position which corresponds to the cylinder stroke 111. The cylinder stroke is the specific position within the limits of maximum and minimum possible cylinder extension. As a cutting cycle starts the, cylinder stroke is moved 112 to the stroke 113 which gives the correct nominal blade gap for the material being sheared. The start 116 of a cutting phase is indicated on the graph. During the cutting phase, the small adjustments to the stroke 114 are made which compensate for the effect of the variation in side loads and the variation in shear stiffness and keep the cutting path parallel. At the end 117 of the cutting phase, the blade is retracted 115, so that the upward movement of the blade can take place.

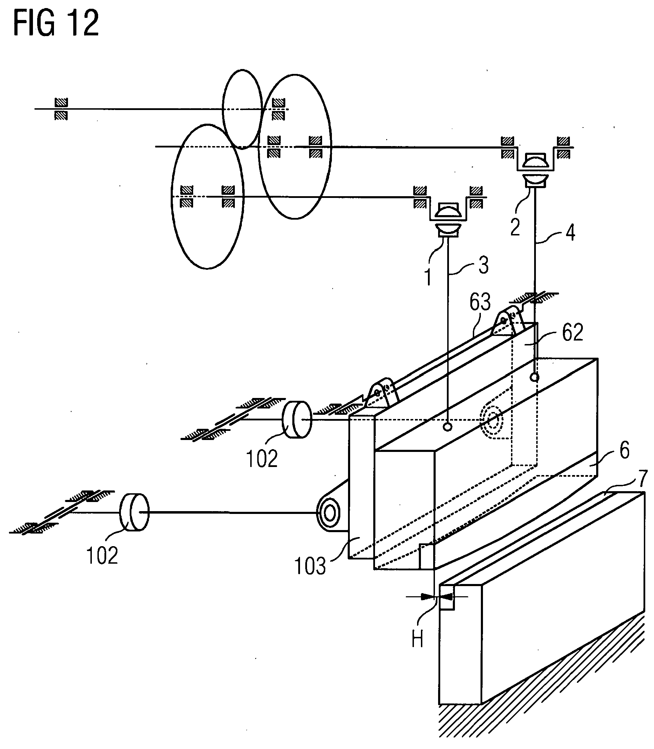

An alternative embodiment of the invention is illustrated in Fig 12. In this version the eccentric shaft 63 for adjusting the nominal blade gap is retained and the hydraulic cylinders do the back-off and also the dynamic adjustments during the cutting cycle. As before, the hydraulic cylinders 102 are operated by high response servovalves (not shown) because they need to make small movements very quickly during the cutting cycle. Position transducers (not shown) either within the cylinders 102 or attached between the moveable slide frame 62 and the main frame are used for feedback and a control system controls the position of the slide frame 62 using these position transducers and the servovalves and cylinders 102.

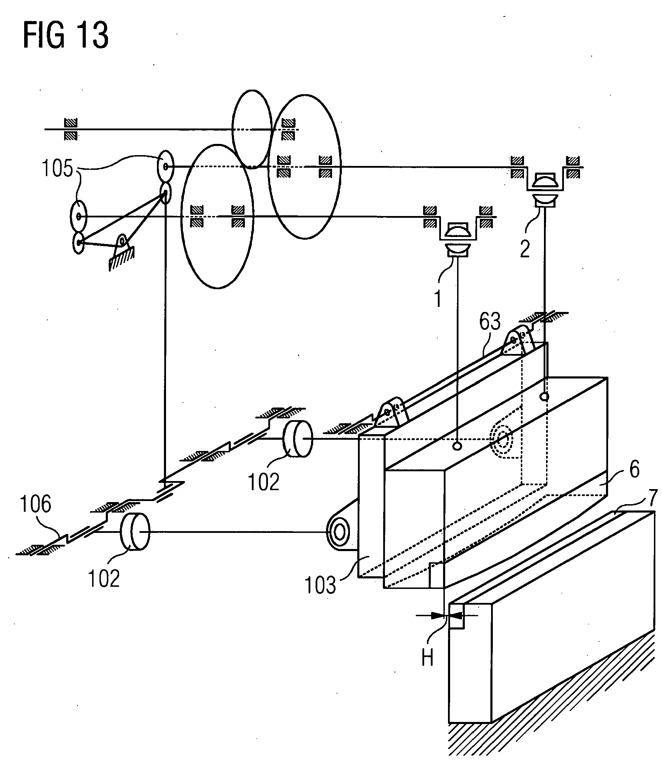

Another embodiment of the invention is illustrated in Fig 13. This version retains both the existing mechanical blade gap adjustment system and the existing mechanical blade retraction mechanism, as shown previously. Cams 105 drive the knife back off motion and eccentric shaft 106 is used to translate the vertical motion of the cams into the horizontal motion of the back off. Hydraulic cylinders 102 are added between the retraction mechanism and the moveable slide frame 62, but in this case the hydraulic cylinders only do the dynamic adjustments during the cutting cycle.

The variation in the blade gap setting during the cutting cycle is set by a control system according to the material being cut. Parameters may include thickness, strength, elongation to fracture, plate temperature and cutting length. The variation may be set manually, for example via operator input to a lookup table according to the plate parameters following manual analysis of the edge quality.

As a further enhancement a sensor, such as a laser scanning device, may be positioned downstream of the shear to look at the cut edge, so that cut edge quality can be determined. Any variation in the edge position with a period equal to the cutting length can be used for feedback into the control system to adjust the variation in the blade gap setting during the cutting cycle in order to minimize this variation. The feedback may either take place on a plate to plate basis, where the data is used for the next plate of a similar material, or if the sensor is sufficiently close to the shear then it can be utilized for the remainder of the plate that is being sheared.

In one method of operating a side trim or slitting shear, having first and second blades, in order to shear a full length of a material to be sheared, the first step comprises determining parameters of a material to be sheared, such as thickness, strength, elongation to fracture, plate temperature and cutting feed length and storing the determined parameters. The parameters may have been stored in a look up table in advance for different materials that may be rolled and then extracted by a controller in a control system for use according to the particular material to be rolled. The next step is to cut a single cutting length of the material in one cutting cycle and then carry out a series of cutting cycles, sufficient to cut the full length of the material. At least once in the series of cutting cycles, the control system uses the determined parameters to control adjustment of the gap between the first and second blades in a cutting phase in a cutting cycle. The cutting phase is less than one complete cutting cycle. In some cases, the adjustment control is carried out for each of the cutting cycles in the series. The position of the blade is changed dynamically, without the parallelism of the blades being changed.

Additional steps may be carried out as required, including determining an initial blade gap before the first cutting cycle commences at the start of a cutting phase of each cutting cycle, moving one of the first and second blades from a retracted position to the initial blade gap position, or backing off one of the first and second blades at the end of a cutting phase of each cutting cycle.

The control system may carry out a further step comprising detecting the position of one of the first and second blades during the series of cutting cycles; comparing the detected position with an expected position based on the chosen parameters to determine a difference; and adjusting the position of one of the first and second blades in a cutting phase of a cutting cycle if the difference falls outside a permitted range.

In some cases, rather than just using pre-stored information to control the adjustment step, cut edge position data for the material at a point downstream of the shear is determined over a time period sufficient for at least one cutting length and this cut edge position data is provided to a controller. The controller then carries out the gap adjusting step ready for a subsequent cutting length.

In the method according to the invention, the same steps of determining material parameters are carried out, but the control system then uses the determined parameters to control adjustment of an angle formed between the first and second blades, in the plane of the material, rather than adjusting the blade gap, for example using the arrangements as described with respect to Figs.6 and7 above.

## Claims

1. A method of operating a side trim or slitting shear comprising a first blade (6) and a second blade (7); the method comprising determining parameters of a material to be sheared; and storing the determined parameters; **characterized by** the step of in a control system using the determined parameters to control adjustment of an angle formed between the first and second blades (6,7) and in the plane of the material.

2. A method according to claim 1, wherein the parameters comprise as least one of material thickness, strength, elongation to fracture, temperature and cutting feed length.

3. A method according to claim 1 or claim 2, wherein the parameters further comprise variation in shear stiffness along the length of the shear.

4. A method according to any preceding claim, wherein the first blade (6) is fixed and the second (7) is moveable.

5. A side trim or slitting shear comprising a first blade (6) and a second blad (7) and store for storing parameters of a material to be sheared; **characterized by** a control system for controlling, using the parameters, adjustment of an angle formed between the first and second blades (6,7) and in the plane of the material.

## Patentansprüche

1. Verfahren zum Betrieb einer Besäum- oder Längsteilschermaschine, die ein erstes Messer (6) und ein zweites Messer (7) umfasst; wobei das Verfahren Bestimmen von Parametern eines zu schneidenden Materials und Speichern der bestimmten Parameter umfasst, **gekennzeichnet durch** den Schritt des Verwendens der bestimmten Parameter in einem Steuersystem zum Steuern der Einstellung eines zwischen dem ersten und dem zweiten Messer (6, 7) und in der Ebene des Materials gebildeten Winkels.

2. Verfahren nach Anspruch 1, wobei die Parameter Dicke und/oder Festigkeit und/oder Bruchdehnung und/oder Temperatur und/oder Schnittvorschublänge des Materials umfassen.

3. Verfahren nach Anspruch 1 oder 2, wobei die Parameter ferner eine Änderung der Schersteifigkeit entlang der Länge der Schermaschine umfassen.

4. Verfahren nach einem vorhergehenden Anspruch, wobei das erste Messer (6) fixiert ist und das zweite Messer (7) beweglich ist.

5. Besäum- oder Längsteilschermaschine, die ein erstes Messer (6) und ein zweites Messer (7) sowie einen Speicher zum Speichern von Parametern eines zu scherenden Materials umfasst; **gekennzeichnet durch** ein Steuersystem zum Steuern der Einstellung eines zwischen dem ersten und dem zweiten Messer (6, 7) und in der Ebene des Materials gebildeten Winkels unter Verwendung der Parameter.

## Revendications

1. Procédé d'opération d'une rogneuse de rives ou d'une cisaille à refendre comprenant une première lame (6) et une seconde lame (7) ; le procédé comprenant la détermination des paramètres d'un matériau à cisailler ; et le stockage des paramètres déterminés ; **caractérisé par** l'étape d'utilisation, dans un système de commande, des paramètres déterminés pour commander le réglage d'un angle formé entre la première et la seconde lame (6, 7) et dans le plan du matériau.

2. Procédé selon la revendication 1, dans lequel les paramètres comprennent au moins un parmi une épaisseur du matériau, une résistance, un allongement à la rupture, une température et une longueur d'alimentation de coupe.

3. Procédé selon la revendication 1 ou la revendication 2, dans lequel les paramètres comprennent en outre une variation de la rigidité de la cisaille le long de la longueur de la cisaille.

4. Procédé selon l'une quelconque des revendications précédentes, dans lequel la première lame (6) est fixe et la seconde lame (7) est mobile.

5. Rogneuse de rives ou cisaille à refendre comprenant une première lame (6) et une seconde lame (7) ; et un stockage permettant de stocker des paramètres d'un matériau à cisailler ; **caractérisé par** un système de commande permettant de commander, à l'aide des paramètres, le réglage d'un angle formé entre la première et la seconde lame (6, 7) et dans le plan du matériau.
